# EUROPEAN PATENT APPLICATION

(11) **EP 4 235 097 A1**
(43) Date of publication of application: **30.08.2023**
(21) Application number: 23154654.0
(22) Date of filing: 02.02.2023
(51) Int. Cl.: G01C 15/06, G01B 3/06, G01B 5/252, B25H 7/02

(54) **REFERENCE POINT INDICATING APPARATUS**

(30) Priority: 03.02.2022 JP 2022015537; 15.12.2022 JP 2022199991
(71) Applicant: Topcon Corporation, Tokyo 174-8580 (JP)
(72) Inventor: KIRYUU, Noriyasu, Tokyo-to, 174-8580 (JP); JINNOUCHI, Ryosuke, Tokyo-to, 174-8580 (JP); NISHITA, Nobuyuki, Tokyo-to, 174-8580 (JP)
(74) Representative: Louis Pöhlau Lohrentz

(57) **Abstract**

Provided is a reference point indicating apparatus, which is comprises an equilateral parallelogram being formed with rotatable link points, contacts provided at tips of extending portions obtained by extending respective sides of the equilateral parallelogram, a link plate for linking between middle points of one set of opposing sides of the equilateral parallelogram, and an indicator provided on the link plate, wherein the contacts are capable of abutting on an object by expansion and contraction of the equilateral parallelogram, wherein the indicator is configured to indicate a reference point of the object in a state where the contacts abut on the object.

## Description

### BACKGROUND OF THE INVENTION

The present invention relates to a reference point indicating apparatus which indicates a point used as a reference for measurement of various members.

When measuring positions of various members constructed at a construction site or the like, it is necessary to indicate reference points of measurement of various members. For instance, in a case where a member is a concrete pile as piled and a center of the concrete pile is indicated as a reference point, as a conventional method, an upper surface of a pile which is piled is measured with a convex or the like, and a center position is obtained and a center point is marked by a writing instrument or the like.

In such a conventional method, operations are complicated and it is easy to lead to human errors, and there are problems such as accuracy depending on a skill level of a worker, and working efficiency is not sufficient.

### SUMMARY OF THE INVENTION

It is an object of the present invention to provide a reference point indicating apparatus which is able to be easily installed in various members and is capable of accurately indicating a reference point of a member.

To attain the object as described above, a reference point indicating apparatus according to the present embodiment comprises an equilateral parallelogram being formed with rotatable link points, contacts provided at tips of extending portions obtained by extending respective sides of the equilateral parallelogram, a link plate for linking between middle points of one set of opposing sides of the equilateral parallelogram, and an indicator provided on the link plate, wherein the contacts are capable of abutting on an object by expansion and contraction of the equilateral parallelogram, wherein the indicator is configured to indicate a reference point of the object in a state where the contacts abut on the object.

Further, in the reference point indicating apparatus according to a preferred embodiment, the indicator is provided at a middle point of the link plate, wherein a reference point set plate is further rotatably provided on the middle point, and a stopper pin capable of abutting on the object is provided at a tip of the reference point set plate.

Further, the reference point indicating apparatus according to a preferred embodiment, further comprises a proportional scale bar, wherein the proportional scale bar is linked between the middle points of the one set of sides, wherein a first proportional starting point and a second proportional starting point respectively located on side surfaces of the object are provided at both ends of the proportional scale bar, wherein proportional scales obtained by equally dividing between the first proportional starting point and the second proportional starting point are provided on the proportional scale bar, and wherein the indicator is attached to an arbitrary position of the proportional scale bar.

Further, the reference point indicating apparatus according to a preferred embodiment, further comprises a proportional scale bar, wherein the proportional scale bar is rotatably provided at a middle point of the link plate, wherein a first proportional starting point and a second proportional starting point respectively located on side surfaces of the object are provided at both ends of the proportional scale bar, wherein proportional scales obtained by equally dividing between the first proportional starting point and the second proportional starting point is provided on the proportional scale bar, and wherein the indicator is attached to an arbitrary position of the proportional scale bar.

Further, the reference point indicating apparatus according to a preferred embodiment, further comprises an offset bar, wherein the offset bar is rotatably provided at a middle point of the link plate, wherein a guide groove is formed on the offset bar, wherein a guide pin is provided at least one link point located in an expansion and contraction direction of the equilateral parallelogram, wherein the guide pin is slidably engaged with the guide groove, wherein a center scale indicating at least a center position is provided on the offset bar, and wherein the indicator is attached to an arbitrary position of the offset bar.

Further, in the reference point indicating apparatus according to a preferred embodiment, auxiliary link sets forming equilateral parallelograms respectively with a same shape as the equilateral parallelogram are provided on two sets of extending portions of the equilateral parallelogram.

Further, in the reference point indicating apparatus according to a preferred embodiment, nuts are respectively provided at tips of one set of extending portions extended from the equilateral parallelogram, wherein both ends of a screw rod are screwed with the nuts, wherein screwing of the nut and the screw rod are inversely threaded at both ends, and wherein the reference point indicating apparatus is configured to expand and contract by rotating the screw rod forward and reverse.

Further, in the reference point indicating apparatus according to a preferred embodiment, a lock bolt for restricting rotation between each side at a link point is provided at least one point of the link point of each side of the equilateral parallelogram.

Further, in the reference point indicating apparatus according to a preferred embodiment, an energizing means for energizing the equilateral parallelogram so as to expand or contract is provided between the link points or at the link point.

Further, the reference point indicating apparatus according to a preferred embodiment, further comprises a lock plate, wherein a base edge of the lock plate is rotatably attached at a middle point of the link plate, wherein the lock plate has a length to intersect one of the extending portions, wherein a long hole is provided at least one of the lock plate and the extending portion, wherein a lock bolt which is slidable along the long hole and fixes the lock plate and the extending portion at a required position is provided on the lock plate.

Further, in the reference point indicating apparatus according to a preferred embodiment, the indicator includes a retro-reflector or a transfer tool.

Further, in the reference point indicating apparatus according to a preferred embodiment, a height adjustment member is provided adjacent to the contact, wherein a lower surface of the height adjustment member is configured to be located on a same plane as a lowest layer plane of the indicator.

Further, in the reference point indicating apparatus according to a preferred embodiment, the height adjustment member includes a guide portion having a thickness gradually increasing from a center side toward an outer peripheral side of the reference point indicating apparatus.

According to the present invention, the reference point indicating apparatus according to the present embodiment comprises an equilateral parallelogram being formed with rotatable link points, contacts provided at tips of extending portions obtained by extending respective sides of the equilateral parallelogram, a link plate for linking between middle points of one set of opposing sides of the equilateral parallelogram, and an indicator provided on the link plate, wherein the contacts are capable of abutting on an object by expansion and contraction of the equilateral parallelogram, wherein the indicator is configured to indicate a reference point of the object in a state where the contacts abut on the object. As a result, it is possible to easily be installed on various members, and to indicate a reference point of a member with sufficient accuracy, there is no human error, and working efficiency is also sufficient.

### BRIEF DESCRIPTION OF THE DRAWINGS

FIG.1 is a perspective diagram showing a reference point indicating apparatus according to a first embodiment of the present invention.
FIG.2A and FIG.2B are operation explanatory drawings regarding a case where an object is circular, in a reference point indicating apparatus according to the first embodiment.
FIG.3 is a schematical diagram showing a modified example of the first embodiment.
FIG.4 is an operation explanatory drawing regarding a case where an object is a wall member, in the first embodiment.
FIG.5 is an operation explanatory drawing regarding a case where an object is a wall member, in the first embodiment.
FIG.6A and FIG.6B are explanatory drawings regarding a second embodiment.
FIG.7 is an explanatory drawing regarding a third embodiment.
FIG.8 is an explanatory drawing regarding a modified example of the third embodiment.
FIG.9 is an explanatory drawing regarding a modified example of the third embodiment.
FIG.10 is an explanatory drawing regarding a modified example of the third embodiment.
FIG.11 is an explanatory drawing regarding a modified example of the third embodiment.
FIG.12 is a schematical diagram showing a fourth embodiment.
FIG.13 is a schematical diagram showing a fifth embodiment.
FIG.14 is a schematical diagram showing a proportional scale bar in the fifth embodiment.
FIG.15 is an operation explanatory drawing regarding the fifth embodiment.
FIG.16 is a schematical diagram showing a sixth embodiment.
FIG.17 is an explanatory drawing regarding an offset bar in the sixth embodiment.
FIG.18 is an operation explanatory drawing regarding the sixth embodiment.
FIG.19 is a perspective diagram showing a seventh embodiment.
FIG.20A is a partial cross-sectional drawing showing a reference point indicating apparatus according to an eighth embodiment, FIG.20B is a partial cross-sectional drawing showing a reference point indicating apparatus according to a modified example of the eighth embodiment, and FIG.20C and FIG.20D are partial cross-sectional drawings showing modified examples of a height adjustment member.

### DETAILED DESCRIPTION OF THE PREFERRED EMBODIMENTS

A description will be given below on embodiments of the present invention by referring to attached drawings.

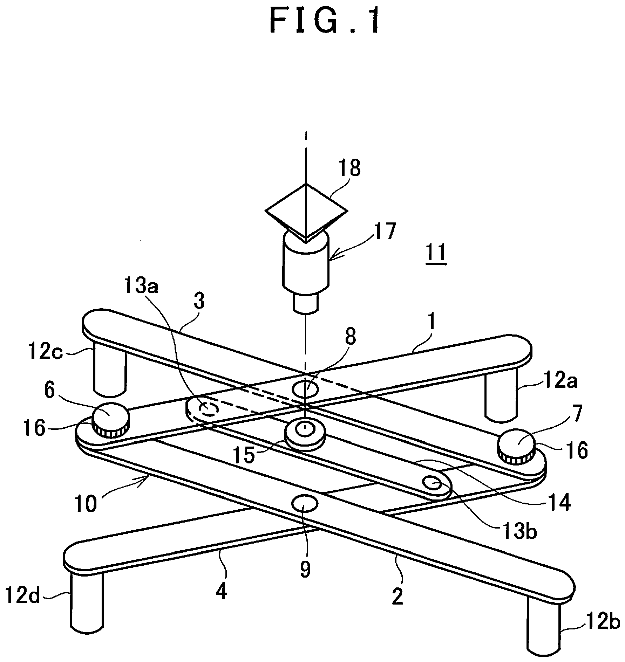

Description will be given on a reference point indicating apparatus 11 according to the first embodiment of the present invention by referring FIG.1.

A first link plate 1 and a second link plate 2 are rotatably linked at base edges (a first link point 6), and each tip is free end. A third link plate 3 and a fourth link plate 4 are rotatably linked at base edges (a second link point 7), and each tip is free end.

The first link plate 1 and the third link plate 3 are rotatably linked at a middle position (a third link point 8), and the second link plate 2 and the fourth link plate 4 are rotatably linked at a middle position (a fourth link point 9).

A distance between the first link point 6 and the third link point 8, a distance between the first link point 6 and the fourth link point 9, a distance between the second link point 7 and the third link point 8, and a distance between the second link point 7 and the fourth link point 9 are all identical. An equilateral parallelogram 10 is formed, as a vertex, with the first link point 6, the second link point 7, the third link point 8, and the fourth link point 9, and the equilateral parallelogram 10 is freely deformable from a square to a shape in which respective sides are closely contact with each other.

A contact 12a is provided at a tip of a portion of the first link plate 1 extending from the equilateral parallelogram 10. The contact 12a has a circular cross section, and protrudes downward perpendicular with respect to the first link plate 1.

Similarly, the second link plate 2, the third link plate 3, and the fourth link plate 4 are respectively provided with contacts 12b, 12c, and 12d at tips of extending portions.

Further, a distance between the third link point 8 and a center of the contact 12a, a distance between the fourth link point 9 and a center of the contact 12b, a distance between the third link point 8 and a center of the contact 12c, and a distance between the fourth link point 9 and a center of the contact 12d are all identical.

A fifth link plate 14 is provided between the first link plate 1 and the fourth link plate 4, with a middle point 13a between the first link point 6 and the third link point 8 in the first link plate 1 as a link point, and a middle point 13b between the second link point 7 and the fourth link point 9 in the fourth link plate 4 as link points.

The fifth link plate 14 is linked in parallel with respect to the second link plate 2 and the third link plate 3, and is configured to follow a motion of the second link plate 2 and the third link plate 3.

An indicator holder 15 is provided at an intermediate position of the fifth link plate 14, and a center line of the indicator holder 15 passes through a middle point between the middle point 13a and the middle point 13b.

A straight line connecting the first link point 6 and the second link point 7 and a straight line connecting the third link point 8 and the fourth link point 9 are orthogonal to each other, and an intersection O thereof is a center of the equilateral parallelogram 10. A center of the indicator holder 15 is located on the intersection O, and is always located at a center of the equilateral parallelogram 10 regardless of a deformation of the equilateral parallelogram 10.

Further, centers of the contacts 12a, 12b, 12c, and 12d are respectively located right-left symmetry and up-down symmetry with respect to the intersection O, and a distance between the center of each contact 12a, 12b, 12c, and 12d and the intersection O is identical.

The equilateral parallelogram 10 deforms in right-left symmetry and up-down symmetry with respect to the intersection O as the center, and the contacts 12a, 12b, 12c, and 12d follow a deformation of the equilateral parallelogram 10, and change their positions in right-left symmetry and up-down symmetry with respect to the intersection O as the center.

Lock bolts 16 are provided on the first link point 6 and the second link point 7 as a fixing means for maintaining and fixing an expansion and contraction state of the reference point indicating apparatus 11, and when the lock bolt 16 is tightened, a rotation (a rotation between each side of the equilateral parallelogram 10) between the first link plate 1 and the second link plate 2 at a link point is fixed and a deformation of the equilateral parallelogram 10 is restrained.

When the lock bolt 16 is loosened, a rotation is free and the equilateral parallelogram 10 may be allowed to deform freely. It is to be noted that the lock bolt 16 may be provided in each link point of the equilateral parallelogram 10, or may be omitted as long as there is no need to restrain a deformation of the equilateral parallelogram 10.

An indicator 17 for indicating a reference point is attachably and detachably provided in the indicator holder 15.

The indicator 17 includes, for instance, a retro-reflector 18 as a reference object to be measured, and an optical center of the retro-reflector 18 is located on a center line of the indicator holder 15 and a height from a reference surface of the reference point indicating apparatus 11 is already known. The retro-reflector 18 is preferably capable of retroreflecting light from all directions, and an omnidirectional prism, a circumferential prism, a reflective sheet which is provided on a spherical surface or cylindrical surface, or the like may be used. It is to be noted that the indicator 17 may include a function for adjusting a height of an optical center of the retro-reflector 18.

Further, as the reference object, it is not limited to a retro-reflector. For instance, as long as a reference point (center point) is measurable, various reference objects, such as three-dimensional objects, such as a cylinder and sphere, or light emitter, target marker, are adoptable.

It is noted that a reference surface of the reference point indicating apparatus 11 may also be a lower surface of the fourth link plate 4. In this case, a small piece with the same thickness as a plate thickness of the fourth link plate 4 may be provided at an appropriate position on at least one back side surface among the second link plate 2, the third link plate 3, and the fifth link plate 14. It is to be noted that the reference surface may be an upper surface of the fifth link plate 14, or the like, and is not limited to a lower surface of the fourth link plate 4.

Further, the indicator 17 may be a scriber capable of transferring a position of the intersection O or a writing instrument such as a transfer tool.

Further, in a case where a use of the reference point indicating apparatus 11 is fixed, an indicator 17 may be directly attached to the fifth link plate 14 without via the indicator holder 15. An indicator 17 may be fixedly provided in the indicator holder 15.

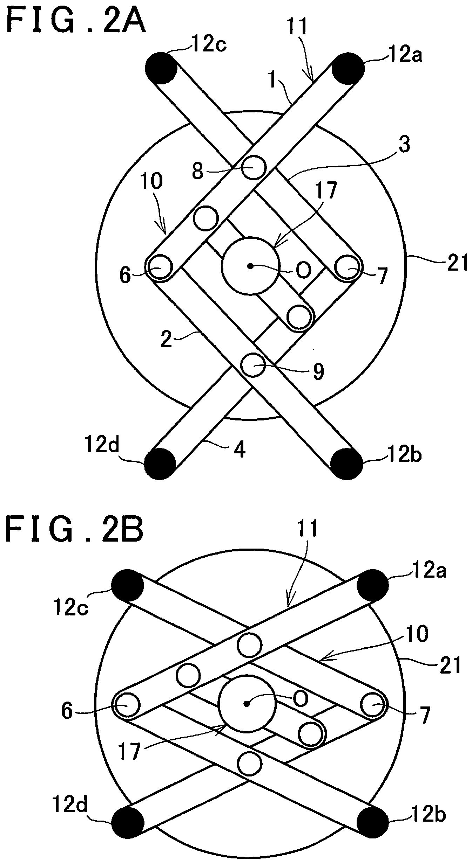

Next, a description will be given on an operation of the above-described reference point indicating apparatus 11 by referring FIG.2A and FIG.2B. Reference numeral 21 denotes a concrete pile 21 piled as an object member, in FIG.2A and FIG.2B. It is to be noted that a description will be given below on a member on which the reference point indicating apparatus 11 is installed as an object.

In a case where a cross section is a circle like the concrete pile 21, a center of the circle is usually obtained as a measurement reference point.

In a state where the reference point indicating apparatus 11 is expanded (a state of the equilateral parallelogram 10 being expanded upward and downward, in a case of the present embodiment), the reference point indicating apparatus 11 is installed on an upper surface of the concrete pile 21.

The reference point indicating apparatus 11 is shortened until the contacts 12a, 12b, 12c, and 12d abut on an outer periphery surface of the concrete pile 21.

In a state where the contacts 12a, 12b, 12c, and 12d abut on the outer periphery surface of the concrete pile 21, a center of the indicator 17 indicates a circle center of an upper surface of the concrete pile 21. That is, by installing the reference point indicating apparatus 11 on the upper surface of the concrete pile 21 and shortening the reference point indicating apparatus 11 until the contacts 12a, 12b, 12c, and 12d abut on the outer periphery of the concrete pile 21, a center of the indicator 17 immediately coincides with a center of the concrete pile 21, and the center of the concrete pile 21 is obtained.

When maintaining a state where the reference point indicating apparatus 11 indicates a center of the concrete pile 21, that is, when maintaining a state where the reference point indicating apparatus 11 is expanded/contracted, the lock bolt 16 is merely tightened.

When the indicator 17 includes a transfer tool, a center is marked on an upper surface of the concrete pile 21 by the transfer tool.

Alternatively, in a case where the indicator 17 includes a retro-reflector, a retro-reflector is measured by a measuring instrument, such as a total station, and it is possible to measure a center position of the concrete pile 21.

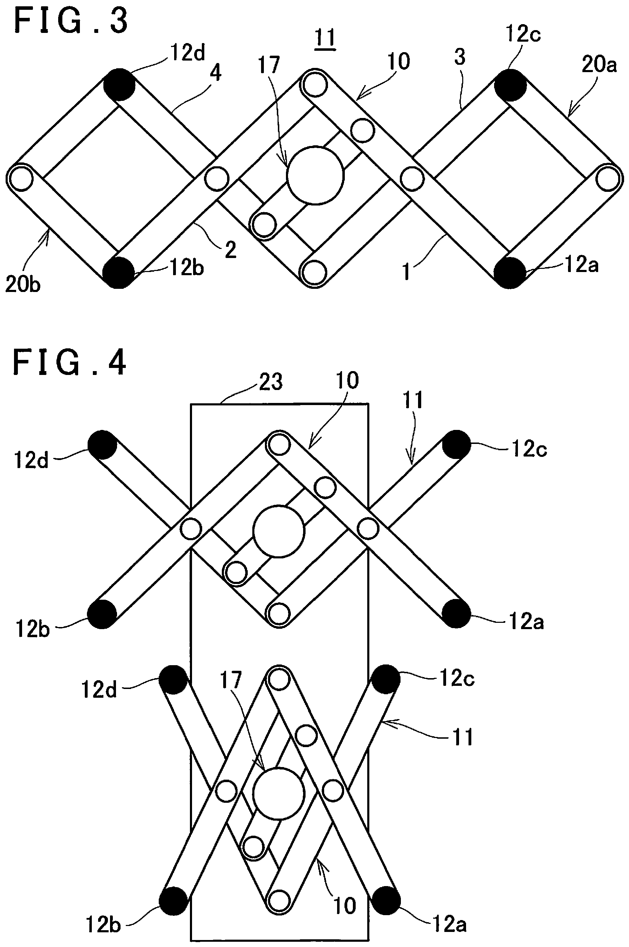

In the above-described embodiment, a tip of each the first link plate 1, the second link plate 2, the third link plate 3, and the fourth link plate 4 is free end. If reinforcement is required, as shown in FIG.3, auxiliary link sets 20a and 20b merely be provided respectively, on tips of extending portions of one set of the first link plates 1 and the third link plate 3 extending in the same direction, and on tips of extending portions of another set of the second link plates 2 and the fourth link plate 4 extending in the same direction so as to form equilateral parallelograms with the same shape as the equilateral parallelogram 10.

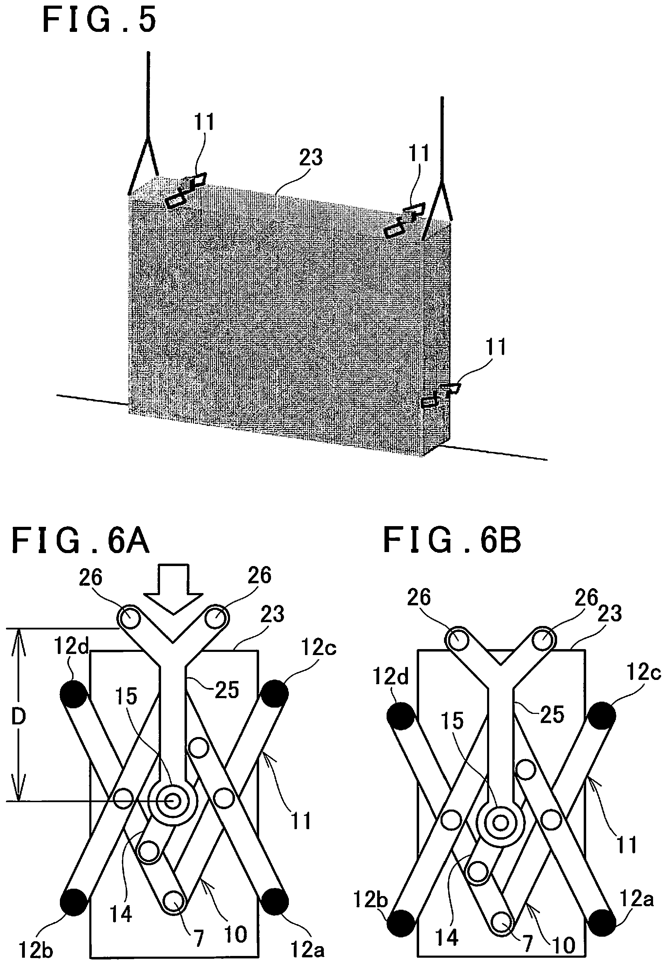

A description will be given on a case where an object is a precast wall member 23 by referring FIG.4 and FIG.5.

Although it is possible to obtain a thickness center of an arbitrary positions of the wall member 23 by using a single reference point indicating apparatus 11, it is possible to obtain a center line of thickness by using two reference point indicating apparatuses 11, as shown in FIG.4.

In a case where an object, such as a precast wall member, is formed by flat surfaces, it is possible to indicate (to obtain) a center between a front side surface and a back side surfaces by the reference point indicating apparatus 11.

In FIG.4, a reference point indicating apparatus 11 on the upper side is in an expanded state, and the reference point indicating apparatus 11 is in a state of not installed in the wall member 23, and another reference point indicating apparatus 11 on the lower side is shortened and is in a state where contacts 12a and 12c abut on a front side surface of the wall member 23 and contacts 12b and 12d abut on a back side surface of the wall member 23, respectively (in installed state). In a state of the reference point indicating apparatus 11 is installed, a center of the indicator 17 is located at a center of a thickness of a wall member 23. That is, the indicator 17 indicates a center between front side and back side surfaces of the wall member 23.

Since, by installing two reference point indicating apparatuses 11, two thickness centers are obtained and a center line of a thickness is obtained, it is possible to obtain a center position of the wall member 23 and also to obtain a tilt and a rotation of the wall member 23 with respect to a horizontal plane.

FIG.5 shows a state where a wall member 23 is suspended by a crane or the like. In FIG.5, by using three reference point indicating apparatuses 11, that is, by providing the reference point indicating apparatus 11 at two locations on an upper surface and at one location on a side surface, it is possible to indicate three points for determining a plane (center plane) positioned at a center of a thickness of the wall member 23. It is to be noted that the reference point indicating apparatus 11 may be provided at one location on the upper surface and two locations on the side surface.

By enabling to indicate a center plane, it is possible to obtain a tilt and a rotation in a horizontal plane of the wall member 23 and to obtain a tilt angle and a tilting direction with respect to a predetermined vertical plane.

FIG.6A and FIG.6B show a second embodiment. A reference point indicating apparatus 11 according to the second embodiment, enables to indicate a thickness center of a wall member 23 and also to indicate a reference point at a predetermined distance from a side surface.

To a middle point of a fifth link plate 14, a base edge of a reference point set plate 25 is rotatably linked. The reference point set plate 25 may be directly rotatably provided on the fifth link plate 14, or may be rotatably fitted externally to an indicator holder 15 (the illustration shows a state of being fitted externally), or may be removable with respect to an indicator holder 15 and may be replaceable with an indicator 17.

A tip portion of the reference point set plate 25 is a symmetrical Y shape, and stopper pins 26 and 26 may be provided respectively at the tips so as to protrude downward. The stopper pins 26 and 26 are provided at a symmetrical position with respect to a center line passing through a rotation center (intersection O) of the reference point set plate 25, or are provided on a line orthogonal to the center line. It is to be noted that a shape of the reference point set plate 25 is not limited to the Y shape.

Further, a distance between lower edges of the stopper pins 26 and 26 (point of contact with the wall member 23) and a rotation center of the reference point set plate 25 is a known value, that is, a distance D to be set from a side surface.

When setting a reference point, by abutting the stopper pins 26 and 26 to a side surface in a state where the contacts 12a, 12b, 12c, and 12d respectively abut to front side and back side surfaces of a wall member 23 (FIG.6B), and it is possible to indicate the reference point as the distance D from the side surface at the center of the thickness of the wall member 23. Alternatively, in a state where the stopper pins 26 and 26 abut on the side surface, front side and back side surfaces of a wall member 23 may abut on respectively the contacts 12a, 12b, 12c, and 12d.

Alternatively, the reference point set plate 25 is configured to be expansible and the distance D may be adjustable to any value.

Alternatively, if a center line of the reference point set plate 25 and a first link point 6 or a second link point 7 coincide with the stopper pin 26, the number of the stopper pins 26 may be one. It is to be noted that a method of coinciding includes, for instance, providing a hole to be capable of visually recognizing the first link point 6 or second link point 7 on the center line of the reference point set plate 25.

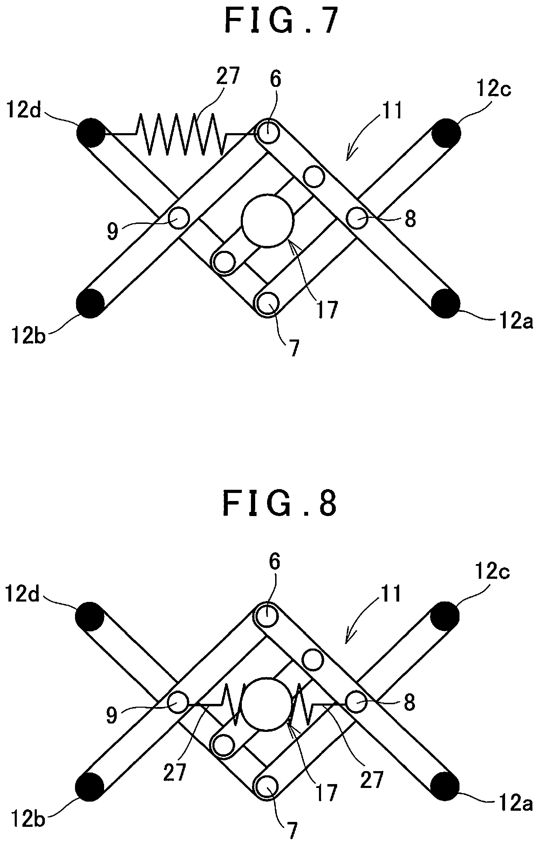

FIG.7, FIG.8, FIG.9, FIG.10 and FIG.11 show a third embodiment. In the third embodiment, an energizing means for energizing a reference point indicating apparatus 11 in a contraction direction is provided. When the reference point indicating apparatus 11 is installed on an object, contacts 12a, 12b, 12c, and 12d are pressed against the object by the energizing means and an installation state is maintained. It is to be noted that, in the third embodiment, the lock bolt 16 may also used together, or may be omitted.

In the third embodiment, a spring 27 is used as an energizing means. It is to be noted that the energizing means may be an expansion spring provided between link points, may be a torsion coil spring provided on an shaft of the link point, may be a rubber provided between the link points, or the like.

In an example shown in FIG.7, a spring 27 is provided between a contact 12d and a first link point 6, and the reference point indicating apparatus 11 is energized in a contraction direction by the spring 27. It is to be noted that, in this case, a spring 27 may be provided any one of between a second link point 7 and a contact 12b, between a contact 12c and a first link points 6, or between a contact 12a and a second link point 7.

In an example shown in FIG.8, a spring 27 is provided between a third link point 8 and a fourth link point 9, and the reference point indicating apparatus 11 is energized in a contraction direction by the spring 27.

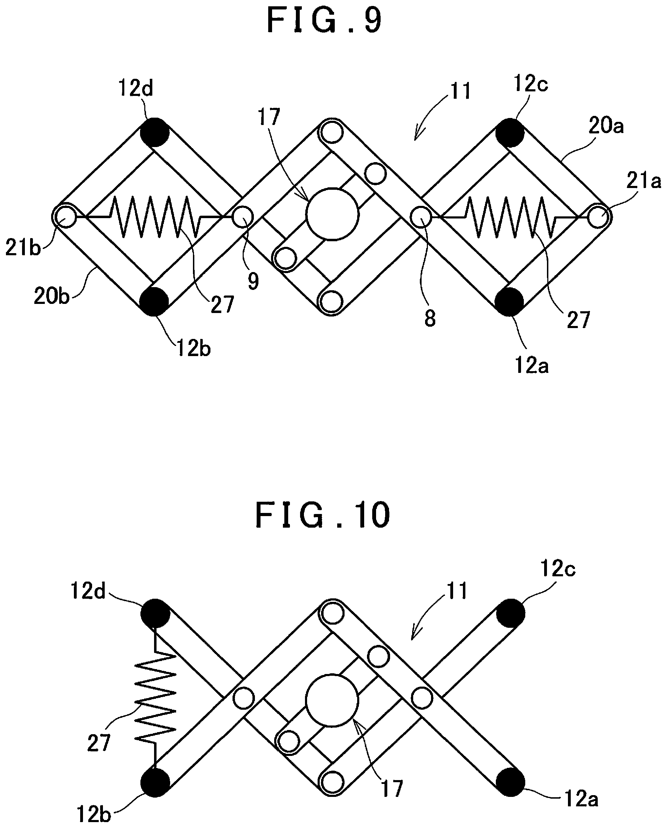

In an example shown in FIG.9, auxiliary link sets 20a and 20b are provided in the reference point indicating apparatus 11. Springs 27 are provided respectively between a link point 21a of an outer edge of the auxiliary link set 20a and a third link point 8, and between a link point 21b of an outer edge of the auxiliary link set 20b and a fourth link point 9, and the reference point indicating apparatus 11 is energized in a contraction direction by the springs 27. It is to be noted that, in this example, any one of springs 27 may be omitted.

In an example shown in FIG.10, a spring 27 is provided between a contact 12b and a contact 12d, and the reference point indicating apparatus 11 is energized in an expansion direction from the spring 27. It is to be noted that, in this case, a spring 27 may be provided also between a contact 12c and a contact 12a.

A usage example in a case where the reference point indicating apparatus 11 is energized in an elongation direction corresponds to, for instance, a case where it is provided in a cylindrical hole or a groove, and a center of the cylindrical hole or groove is indicated as a reference point.

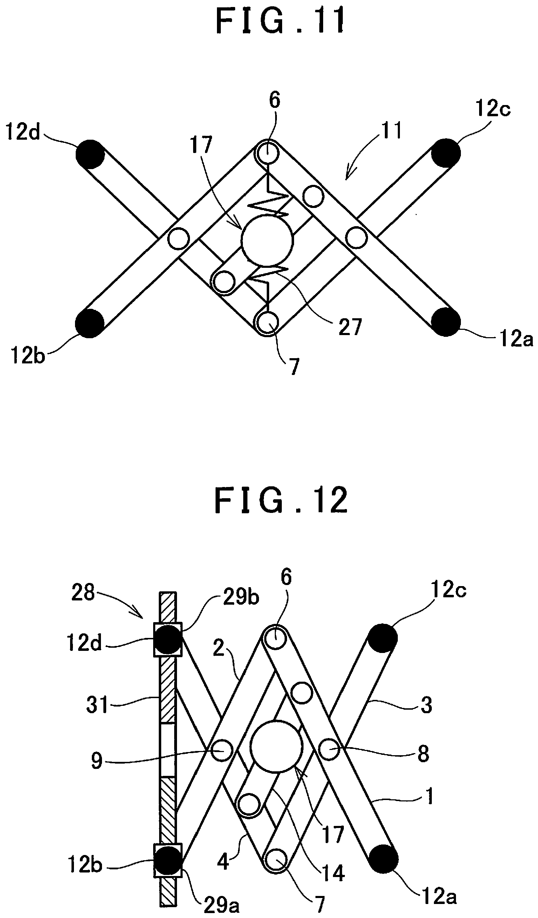

In an example shown in FIG.11, a spring 27 is provided between a first link point 6 and a second link point 7, and the reference point indicating apparatus 11 is energized in an elongation direction by the spring 27.

FIG.12 shows a fourth embodiment. In the fourth embodiment, an expansion and contraction means 28 is provided, and the expansion and contraction means 28 is capable of extending and contracting a reference point indicating apparatus 11 and is capable of maintaining a state of being extended and contracted.

A description will be given on a reference point indicating apparatus 11 according to the fourth embodiment and the expansion and contraction means 28.

A nut 29a is provided at a tip of a second link plate 2, and the nut 29a is freely rotatable around an axis perpendicular to a second link plate 2 as the center. Further, a nut 29b is provided at a tip of a fourth link plate 4, and the nut 29b is freely rotatable around an axis perpendicular to a fourth link plate 4 as the center.

One of the nut 29a and the nut 29b, for instance, the nut 29a is provided with a right-handed screw, and the other nut 29b is provided with a left-handed screw.

A screw rod 31 is provided across the nut 29a and the nut 29b. Both ends of the screw rod 31 are threaded, and both ends are respectively screwed with the nut 29a and the nut 29b. Both ends of the screw rod 31 are inversely threaded, for instance, a right-handed screw is threaded on a portion to screw with the nut 29a, and a left-handed screw is threaded on a portion to screw with the nut 29b.

Therefore, by rotating the screw rod 31 forward and reverse, the nuts 29a and 29b are brought closer and separated, and the reference point indicating apparatus 11 expands and contracts in accordance with a direction of rotation of the screw rod 31.

After the contacts 12a, 12b, 12c, and 12d abut on an object, if the screw rod 31 tightened by a required amount, it is possible to abut the contacts 12a, 12b, 12c, and 12d on the object by a required pressing force, and to maintain a state where a reference point indicating apparatus 11 is installed on the object. It is to be noted that the nuts 29a and 29b may be provided at the tips of a second link plate 2 and a fourth link plate 4 further extending from the contacts 12b and 12d.

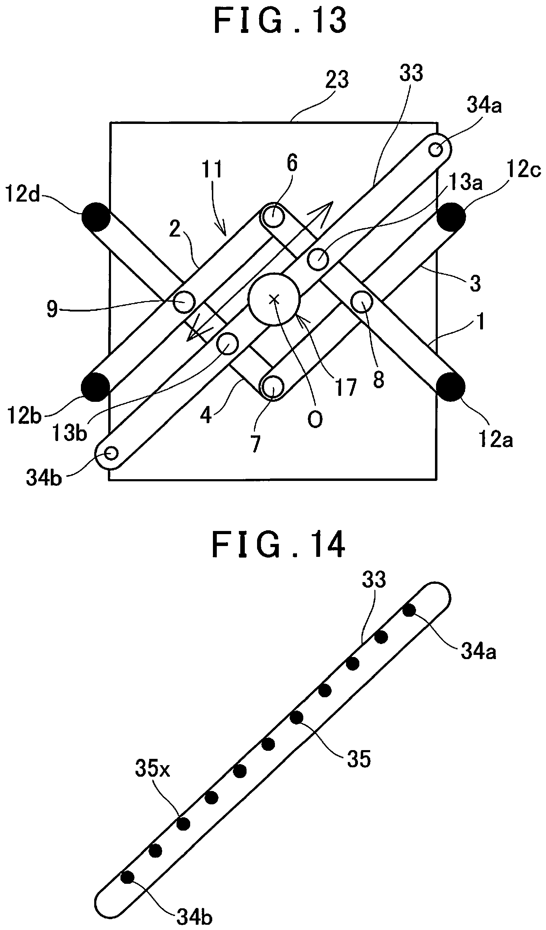

FIG.13, FIG.14 and FIG.15 show a fifth embodiment.

In the fifth embodiment, a proportional scale bar 33 which serves as a fifth link plate 14 is provided on the above-described reference point indicating apparatus 11. It is to be noted that the proportional scale bar 33 may be provided to be superposed on a fifth link plate 14.

The proportional scale bar 33 is rotatably linked to a first link plate 1 and a fourth link plate 4 at a middle point 13a between a first link point 6 and a third link point 8 and at a middle point 13b between a second link point 7 and a fourth link point 9 (or is rotatably linked to a second link plate 2 and a third link plate 3 rotatably link at a middle point between a first link point 6 and a fourth link point 9 and a middle point between a second link point 7 and a third link point 8).

The proportional scale bar 33 extends further outward from the middle points 13a and 13b, one end of which is located approximately on a line connecting centers of contacts 12a and 12c and similarly the other end is located approximately on a line connecting centers of contacts 12b and 12d.

A first proportional starting point 34a indicating a position of a wall surface of the wall member 23 is provided at one end of the proportional scale bar 33. The first proportional starting point 34a is located on a line connecting contact points where the contacts 12a and 12c are in contact with the wall member 23. A second proportional starting point 34b indicating a position of a wall surface of the wall member 23 is provided at the other end of the proportional scale bar 33. The second proportional starting point 34b is located on a line connecting contact points where the contacts 12b and 12d are in contact with the wall member 23.

Proportional scales 35 are provided on the proportional scale bar 33. The proportional scales 35 obtained by equally dividing between the first proportional starting point 34a and the second proportional starting point 34b by a predetermined amount. An indicator 17 can be attached to each position of the proportional scales 35. For instance, indicator attachment holes may be provided at positions of the proportional scales 35 such that the indicator 17 may be attachable and detachable.

In the above-described configuration, since a center of a first proportional starting point 34a, a contact point of the contact 12c, a second link point 7, and an intersection 0 form a parallelogram (and since a center of a second proportional starting point 34b, a contact point of the contact 12b, a first link point 6, and the intersection 0 form a parallelogram), when the contacts 12a, 12b, 12c, and 12d are in contact with a wall surface of a wall member 23, the first proportional starting point 34a and the second proportional starting point 34b are located on the wall surface of the wall member 23 regardless of expansion and contraction of the reference point indicating apparatus 11.

Therefore, when the proportional scales 35 equally divide between the first proportional starting point 34a and the second proportional starting points 34b into ten portions, and the indicator 17 is provided at a proportional scale 35x which is a second from the second proportional starting point 34b, the indicator 17 indicates a position corresponding to 2:8 with respect to a thickness of the wall member 23.

It is to be noted that the proportional scale bar 33 may be formed sufficient longer than a thickness of a wall member 23, may be provided rotatable at one point of a middle point of a fifth link plate 14, that is, the intersection O, and may have contacts, which are provided at both ends of the proportional scale bar 33 and are capable of abutting on both surfaces of the wall member 23.

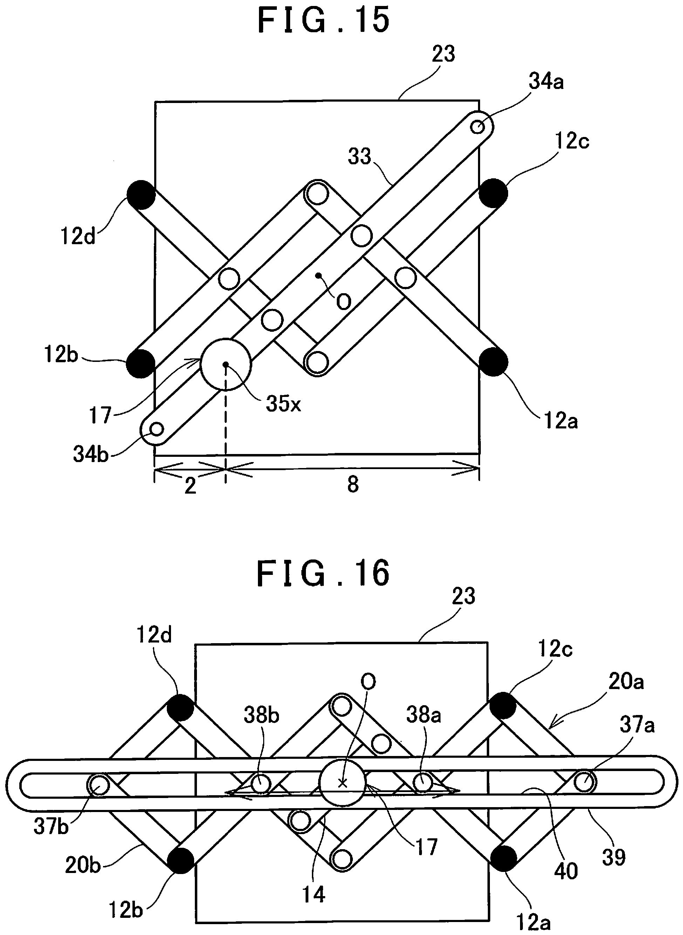

FIG.16, FIG.17 and FIG.18 show a sixth embodiment.

In the sixth embodiment, it is possible to indicate a reference point at an arbitrary position offset from a center position of a wall member 23.

An auxiliary link set 20a and an auxiliary link set 20b are respectively provided at both ends of a reference point indicating apparatus 11, a guide pin 37a is provided on a link point at a tip of the auxiliary link set 20a, and a guide pin 37b is provided on a link point at a tip of the auxiliary link set 20b.

Further, guide pins 38a and 38b are respectively provided also on a third link point 8 and a fourth link point 9. Therefore, the guide pins 37a and 37b and the guide pins 38a and 38b are located in an expansion and contraction direction of the reference point indicating apparatus 11 (located on a center line in the expansion and contraction direction of the equilateral parallelogram 10).

An offset bar 39 is rotatably linked at a middle point (intersection O) of a fifth link plate 14, at the center position of the offset bar 39.

The guide groove 40 is provided over substantially the entire length of the offset bar 39, and the guide pins 37a and 37b and the guide pins 38a and 38b are slidably engaged with the guide groove 40. Further, an indicator 17 is slidably provided in the guide groove 40, and the indicator 17 can be fixed in an arbitrary position of the guide groove 40.

A center scale indicating a center is provided at least a center position of the offset bar 39.

When the reference point indicating apparatus 11 expands and contracts in accordance with a thickness of the wall member 23, the guide pins 37a and 37b and the guide pins 38a and 38b are guided and slided in the guide groove 40.

If setting an offset amount, after installing the reference point indicating apparatus 11 on the wall member 23, the indicator 17 is merely fixed to a position of a predetermined offset amount from the center scale.

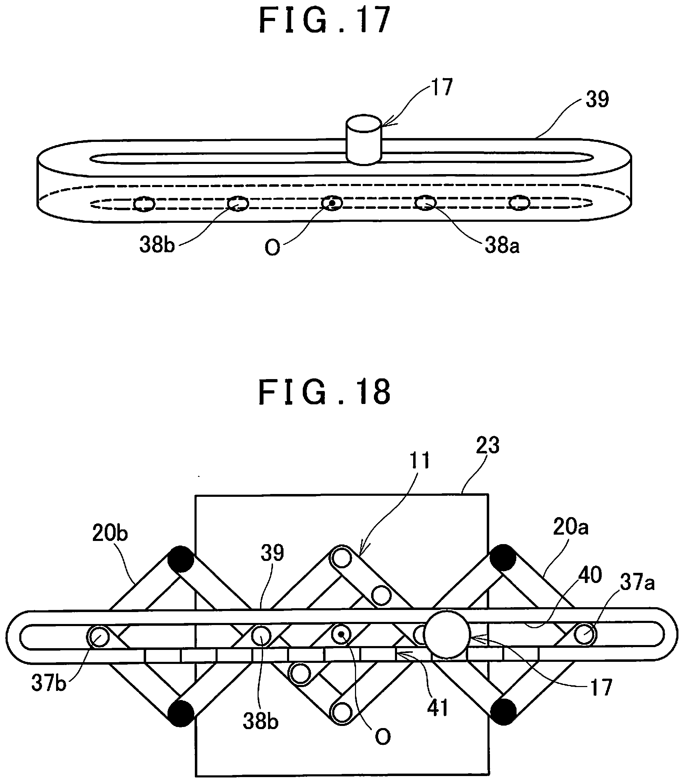

It is to be noted that, as shown in FIG.18, offset scales 41 may be engraved or printed on the offset bar 39, and the indicator 17 may be fixed to a predetermined position in accordance with the offset scales 41.

Further, a reference point indicating apparatus 11 shown in the sixth embodiment is applicable also to a circular member such as a concrete pile 21, and when the reference point indicating apparatus 11 is applied to a circular member, it is also possible to set an offsetting direction by directing a center line of the offset bar 39 to a preferred direction.

It is to be noted that any one of the guide pins 37a, 37b and the guide pins 38a, 38b may be omitted. Alternatively, at least one guide pin among the guide pins 37a and 37b and the guide pins 38a and 38b may be provided. Alternatively, if sufficient strength is obtained by the reference point indicating apparatus 11, the auxiliary link sets 20a and 20b may be omitted.

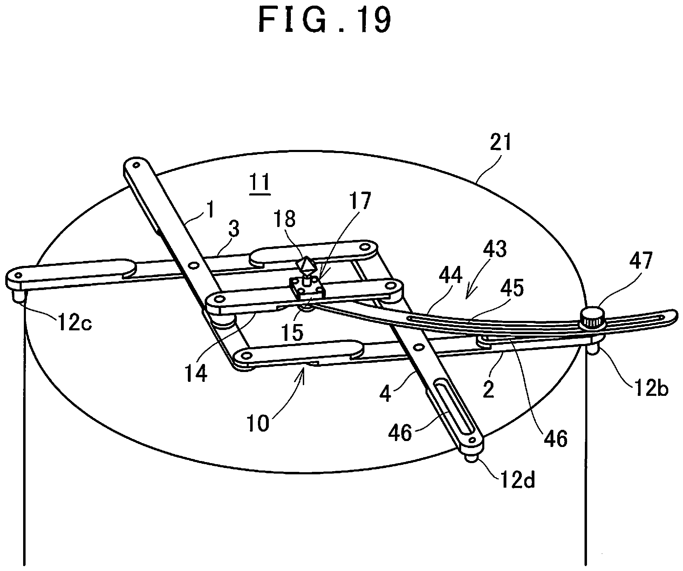

FIG.19 shows a seventh embodiment. It is to be noted that, in FIG.19, the same components as those in FIG.1 are denoted by the same reference numerals, and description thereof will be omitted. Seventh embodiment is further provided with a locking means 43.

A base edge of a lock plate 44 is attached to a middle point of the fifth link plate 14 rotatable (a position of an intersection of an equilateral parallelogram 10). The lock plate 44 has a curved shape, and the link plate has a length and a shape capable of intersecting with a required link plate, for instance, a second link plate 2.

A long hole 45 following the curved shape is formed in the lock plate 44. Further, a long hole 46 with a required length is provided in an extending portion of the second link plate 2 from a tip toward a base edge.

A lock bolt 47 capable of sliding the long hole 45 is provided on the lock plate 44. The lock bolt 47 passes through the long holes 45 and 46 at a position where the long hole 45 and the long hole 46 intersect with each other, and is slidable through the long holes 45 and 46. Further, the long hole 46 is provided with a slide nut (not shown), the lock bolt 47 can be screwed in the slide nut, and the slide nut is slidable through the long hole 46 in a state of being screwed with the lock bolt 47.

A description will be given on a case where a reference point indicating apparatus 11 is installed on an object, for instance, a concrete pile 21, by referring FIG.2A and FIG.2B.

A reference point indicating apparatus 11 is installed on an upper surface of the concrete pile 21 in a state where the lock bolt 47 is loosened, the reference point indicating apparatus 11 is contracted, and contacts 12a, 12b, 12c, and 12d is made to abut on a side surface of the concrete pile 21. During the contracting process of the reference point indicating apparatus 11, an intersecting position of the long holes 45 and 46 is moved, and the lock bolt 47 slides through the long holes 45 and 46.

In a state where the contacts 12a, 12b, 12c, and 12d abut on the side surface of the concrete pile 21, a center of the reference point indicating apparatus 11 coincides with a center of the concrete pile 21, and an optical center of the retro-reflector 18 is located on a center line of the concrete pile 21. By tightening the lock bolt 47, a motion of the lock bolt 47 within the long hole 45 and 46 is restricted. The lock plate 44 is fixed with a base edge and the lock bolt 47, and an expansion and contraction state of the reference point indicating apparatus 11 is fixed and maintained.

It is to be noted that the long hole 46 may further be provided in another link plate, for instance, a fourth link plate 4. By a long hole 46 being provided in the lock plate 44, it is possible to replace the lock plate 44 in accordance with a usage condition of the reference point indicating apparatus 11.

By curving the lock plate 44 and providing long holes in the lock plate 44 and the second link plate 2, it is possible to smoothly slide the lock bolt 47 and to increase a movable range of expansion and contraction of the reference point indicating apparatus 11.

It is to be noted that the lock plate 44 may be straight, and a long hole may be provided only on any one of a lock plate 44 or a second link plate 2.

Further, needless to say that it is possible to appropriately adapt the locking means 43 also in the embodiments in which an equilateral parallelogram 10 is freely deformable among the above-described embodiments.

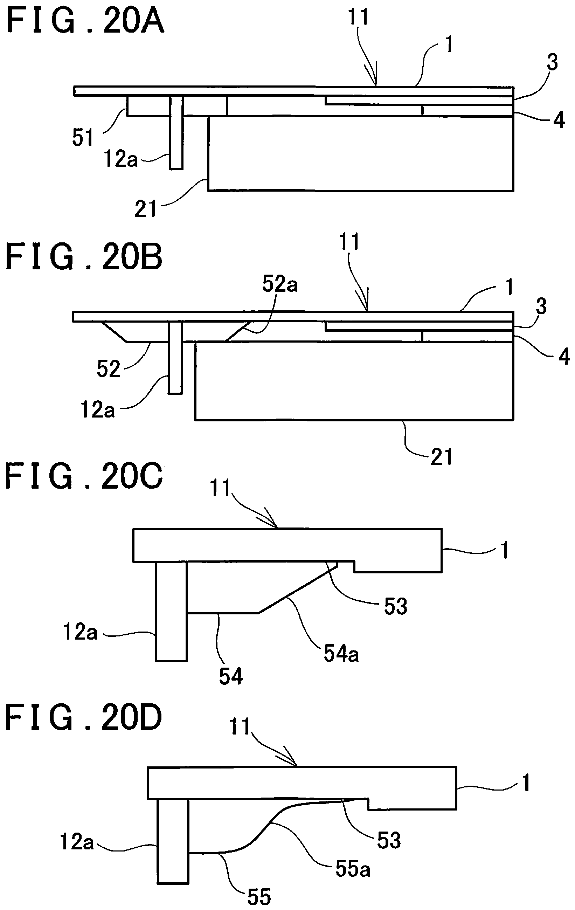

Next, in FIG.20A, a description will be given on the eighth embodiment of the present invention by referring FIG.1. It is to be noted that, in FIG.20A, the same components as those in FIG.1 are denoted by the same reference numerals, and description thereof will be omitted. Further, FIG.20A describes a first link plate 1.

In particular, in a case where a reference point indicating apparatus 11 is upsized, the first link plate 1 may bend downward due to a self-weight of the first link plate 1, or due to a weight of a contact 12a. Since a contact state between an object (a concrete pile 21) and the contact 12a changes when the first link plate 1 bends, there may be a possibility that a positional displacement may occur between a center of the concrete pile 21 and an indicator.

In the eighth embodiment, a height adjustment member 51, such as a spacer, is provided around the contact 12a or adjacent to the contact 12a. The height adjustment member 51 is, for instance, cylindrical, and a lower surface of the height adjustment member 51 is configured to be located on the same plane as a lower surface of a fourth link plate 4. That is, when the reference point indicating apparatus 11 is attached to the concrete pile 21, a lower surface of the fourth link plate 4 (that is, lower surface of the lowest layer of the reference point indicating apparatus 11) and a lower surface of the height adjustment member 51 are in contact with an upper surface of the concrete pile 21 on the same plane.

By attaching the reference point indicating apparatus 11 to the concrete pile 21 so as to contact a lower surface of the height adjustment member 51 with an upper surface of the concrete pile 21, it is possible to contact a peripheral surface of the contact 12a with a peripheral surface of the concrete pile 21 without bending the first link plate 1. Therefore, it is possible to prevent a positional displacement which occurs between a center of the concrete pile 21 and the indicator and to improve measurement accuracy of a center of the concrete pile 21.

It is to be noted that, in the above description, the first link plate 1 has been described, but a height adjustment member for preventing bending may be also provided on a second link plate 2 and a third link plate 3 similarly to the first link plate 1.

FIG.20B shows a modified example of the eighth embodiment. The height adjustment member 51 is cylindrical in the eighth embodiment. However, in a case where the height adjustment member 51 is cylindrical, there is a possibility of mistaking a contact between a peripheral surface of the height adjustment member 51 and a peripheral surface of the concrete pile 21 for a contact between a peripheral surface of the contact 12a and a peripheral surface of the concrete pile 21.

In the modified example of eighth embodiment, the height adjustment member 52 has, for instance, a frustum shape with a downward decreasing diameter. That is, the height adjustment member 52 has a slope-shaped guide portion 52a with a thickness gradually increasing toward an outer peripheral side from a center side of reference point indicating apparatus 11.

When a peripheral surface of the height adjustment member 52, that is, the guide portion 52a is contact with a periphery (a corner) of the concrete pile 21, since the corner of the concrete pile 21 slides and is guided in the guide portion 52a, movement of the first link plate 1 is not prevented until a peripheral surface of the contact 12a and a peripheral surface of the concrete pile 21 are in contact with each other. Therefore, it is possible to prevent from mistaking a contact between a peripheral surface of the height adjustment member 52 and a peripheral surface of the concrete pile 21 for a contact between a peripheral surface of the contact 12a and a peripheral surface of the concrete pile 21, and to improve an installation workability of a reference point indicating apparatus 11 and to improve measurement accuracy of a center of the concrete pile 21.

It is to be noted that, as shown in FIG.20C, a concave portion 53 is formed on a back side surface of a tip portion of a first link plate 1, a height adjustment member 54 may be provided on the concave portion 53. The height adjustment member 54 has a slope-shaped guide portion 54a with a thickness gradually increasing toward an outer peripheral side from a center side of a reference point indicating apparatus 11 and only in a direction parallel to a straight line connecting the contact 12a and the indicator. Since, by providing the height adjustment member 54 on the concave portion 53, a corner of the concrete pile 21 reliably abuts on the guide portion 54a without sharpening a tip of the guide portion 54a, it is possible to easily process the guide portion 54a. Further, as shown in FIG.20D, a height adjustment member 55 having a guide portion 55a with a curved surface may be used.

In the eighth embodiment and the modified example thereof, a case where a height adjustment member is provided on a link plate according to the first embodiment has been described, but, needless to say, a height adjustment member of this embodiment may be provided on a link plate of other embodiments.

## Claims

1. A reference point indicating apparatus comprising: an equilateral parallelogram being formed with rotatable link points, contacts (12a, 12b, 12c, 12d) provided at tips of extending portions obtained by extending respective sides of said equilateral parallelogram (10), a link plate (14) for linking between middle points of one set of opposing sides of said equilateral parallelogram, and an indicator (17) provided on said link plate, wherein said contacts are capable of abutting on an object by expansion and contraction of said equilateral parallelogram, wherein said indicator is configured to indicate a reference point of said object in a state where said contacts abut on said object.

2. The reference point indicating apparatus according to claim 1, wherein said indicator (17) is provided at a middle point of said link plate (14), wherein a reference point set plate (25) is further rotatably provided on said middle point, and a stopper pin (26) capable of abutting on said object is provided at a tip of said reference point set plate.

3. The reference point indicating apparatus according to claim 1, further comprising a proportional scale bar (33), wherein said proportional scale bar is linked between said middle points of said one set of sides, wherein a first proportional starting point (34a) and a second proportional starting point (34b) respectively located on side surfaces of said object are provided at both ends of said proportional scale bar, wherein proportional scales (35) obtained by equally dividing between said first proportional starting point and said second proportional starting point are provided on said proportional scale bar, and wherein said indicator (17) is attached to an arbitrary position of said proportional scale bar.

4. The reference point indicating apparatus according to claim 1, further comprising a proportional scale bar (33), wherein said proportional scale bar is rotatably provided at a middle point of said link plate (14), wherein a first proportional starting point (34a) and a second proportional starting point (34b) respectively located on side surfaces of said object are provided at both ends of said proportional scale bar, wherein proportional scales (35) obtained by equally dividing between said first proportional starting point and said second proportional starting point is provided on said proportional scale bar, and wherein said indicator is attached to an arbitrary position of said proportional scale bar.

5. The reference point indicating apparatus according to claim 1, further comprising an offset bar (39), wherein said offset bar is rotatably provided at a middle point of said link plate (14), wherein a guide groove (40) is formed on said offset bar, wherein a guide pin (37a, 37b, 38a, 38b) is provided at least one link point located in an expansion and contraction direction of said equilateral parallelogram (10), wherein said guide pin is slidably engaged with said guide groove, wherein a center scale indicating at least a center position is provided on said offset bar, and wherein said indicator (17) is attached to an arbitrary position of said offset bar.

6. The reference point indicating apparatus according to claim 1, wherein auxiliary link sets (20a, 20b) forming equilateral parallelograms respectively with a same shape as said equilateral parallelogram (10) are provided on two sets of extending portions of said equilateral parallelogram (10).

7. The reference point indicating apparatus according to claim 1, wherein nuts (29a, 29b) are respectively provided at tips of one set of extending portions extended from said equilateral parallelogram (10), wherein both ends of a screw rod (31) are screwed with said nuts, wherein screwing of said nut and said screw rod are inversely threaded at both ends, and wherein said reference point indicating apparatus is configured to expand and contract by rotating said screw rod forward and reverse.

8. The reference point indicating apparatus according to any one of claims 1-6, wherein a lock bolt (47) for restricting rotation between each side at a link point is provided at least one point of said link point of each side of said equilateral parallelogram (10).

9. The reference point indicating apparatus according to any one of claims 1-6, wherein an energizing means for energizing said equilateral parallelogram (10) so as to expand or contract is provided between said link points or at said link point.

10. The reference point indicating apparatus according to any one of claims 1-4, 6, further comprising a lock plate (44), wherein a base edge of said lock plate is rotatably attached at a middle point of said link plate (14), wherein said lock plate has a length to intersect one of said extending portions, wherein a long hole (45, 46) is provided at least one of said lock plate and said extending portion, wherein a lock bolt (47) which is slidable along said long hole and fixes said lock plate and said extending portion at a required position is provided on said lock plate.

11. The reference point indicating apparatus according to any one of claims 1-7, wherein said indicator (17) includes a retro-reflector or a transfer tool.

12. The reference point indicating apparatus according to any one of claims 1-7, wherein a height adjustment member (51, 52) is provided adjacent to said contact (12a, 12b, 12c, 12d), wherein a lower surface of said height adjustment member is configured to be located on a same plane as a lowest layer plane of said indicator.

13. The reference point indicating apparatus according to claim 12, wherein said height adjustment member (51, 52) includes a guide portion (52a, 54a, 55a) having a thickness gradually increasing from a center side toward an outer peripheral side of said reference point indicating apparatus.
